(19) Europäisches Patentamt
European Patent Office
Office européen des brevets

(11) **EP 1 102 814 B1**

(12) **EUROPÄISCHE PATENTSCHRIFT**

(45) Veröffentlichungstag und Bekanntmachung des Hinweises auf die Patenterteilung:
**02.01.2004  Patentblatt 2004/01**

(51) Int Cl.[7]: **C08L 3/00**, C08L 3/02, C08L 3/06, A22C 13/00, C08J 5/18

(21) Anmeldenummer: **99925000.4**

(22) Anmeldetag: **18.05.1999**

(86) Internationale Anmeldenummer:
**PCT/EP1999/003400**

(87) Internationale Veröffentlichungsnummer:
**WO 1999/061524 (02.12.1999 Gazette 1999/48)**

(54) **FOLIE, DIE STÄRKE ODER STÄRKEDERIVATE UND POLYESTERURETHANE ENTHÄLT**

FILM CONTAINING STARCH OR STARCH DERIVATIVES AND POLYESTER URETHANES

FILM CONTENANT DE L'AMIDON OU DE DERIVES D'AMIDON ET DES POLYESTERURETHANES

(84) Benannte Vertragsstaaten:
**AT BE DE DK ES FI FR GB GR IT NL**

(30) Priorität: **25.05.1998  DE 19822979**

(43) Veröffentlichungstag der Anmeldung:
**30.05.2001  Patentblatt 2001/22**

(73) Patentinhaber: **Kalle Nalo GmbH & Co. KG**
**65203 Wiesbaden (DE)**

(72) Erfinder:
• **HAMMER, Klaus-Dieter**
**D-55120 Mainz (DE)**
• **AHLERS, Michael**
**D-55122 Mainz (DE)**
• **GROLIG, Gerhard**
**D-64546 Mörfelden-Walldorf (DE)**

• **FRITZ, Hans-Gerhard**
**D-73066 Uhingen (DE)**
• **SEIDENSTÜCKER, Thomas**
**D-51061 Köln (DE)**

(74) Vertreter: **Plate, Jürgen, Dr. et al**
**Patentanwaltskanzlei Zounek,**
**Industriepark Kalle-Albert,**
**Gebäude H391**
**Rheingaustrasse 190**
**65174 Wiesbaden (DE)**

(56) Entgegenhaltungen:
EP-A- 0 820 698          EP-A- 0 841 432
WO-A-99/40797           DD-A- 247 830
DE-A- 3 428 111          DE-A- 19 633 476
DE-A- 19 805 925

**Beschreibung**

Die Erfindung betrifft eine Folie, die thermoplastische Stärke und/oder thermoplastische Stärkederivate enthält und besonders als Nahrungsmittelhülle geeignet ist. Daneben betrifft die Erfindung ein Verfahren zur Herstellung dieser Nahrungsmittelhülle und deren Verwendung als Verpackungsfolie, insbesondere als Wursthülle.

Die meisten Wursthüllen bestehen aus Tierdarm, aber auch aus faserverstärkter regenerierter Cellulose, Kollagen oder synthetischen Polymeren. Cellulose und Kollagen sind zwar natürlichen Ursprungs, aber die Herstellung solcher Wursthüllen erfolgt in aufwendigen und umweltbelastenden Verfahren. Hüllen aus anderem Material, beispielsweise aus eiweiß- oder acrylatbeschichtetem Gewebe, haben dagegen nur eine geringe Bedeutung.

Von den bekannten Hüllen decken die aus Cellulosehydrat das breiteste Anwendungsspektrum ab. Sie haben jedoch für manche Anwendungen eine zu hohe Durchlässigkeit für Wasserdampf und/oder Sauerstoff. Kollagenhüllen haben eine geringere Durchlässigkeit, sind dagegen zu labil. Die Hüllen aus synthetischen Polymeren sind zur Herstellung von Dauerwurst ungeeignet. Sie lassen sich zwar preiswert und einfach herstellen, beispielsweise durch Extrudieren, sind jedoch im Gegensatz zu den Cellulosehydrat- oder Kollagenhüllen nicht biologisch abbaubar.

Die in der EP-A 0 709 030 beschriebene, durch Extrusion von thermoplastischer Stärke hergestellte Wursthülle ist zwar biologisch abbaubar, weist aber noch immer Defizite auf. Sie ist insbesondere nicht ausreichend kochbeständig und neigt zum Verspröden nach Wasserbehandlung oder durch Weichmacherverlust.

Bekannt sind schließlich auch ein- oder mehrschichtige schlauchförmige, biaxial verstreckte Lebensmittelhüllen, die aus einem thermoplastischen verarbeitbaren, biologisch abbaubaren Polymer besteht oder mindestens eine Schicht daraus enthält (EP-A 0 820 698). Sie werden durch ein Extrusionsverfahren hergestellt. Als thermoplastisch verarbeitbare, biologisch abbaubare Polymere kommen dabei aliphatische oder teilaromatische Polyester, thermoplastische aliphatische Polyesterurethane, aliphatisch-aromatische Polyestercarbonate und insbesondere aliphatische Polyesteramide in Frage. Schlauchförmige Hüllen aus diesen Polymeren, insbesondere aus Polyesterurethanen, zeigen jedoch eine schlechte Kaliberkonstanz, was zu Problemen bei der Verarbeitung führt.

Es bestand daher die Aufgabe, eine Nahrungsmittelhülle zu entwickeln, die sich aus natürlichen, nachwachsenden Rohstoffen auf einfache und umweltschonende Weise, möglichst mit einem Extrusionsverfahren, herstellen läßt und dabei gleichzeitig kompostierbar oder wenigstens biologisch abbaubar ist. Die Hülle soll ausreichend permeabel und für praktisch alle Wurstarten, d. h. für die Herstellung von Koch- und Brühwürsten ebenso wie von Rohwürsten, verwendbar sein.

Gelöst wird die Aufgabe durch eine Mischung (Blend) aus a) thermoplastischer Stärke und/oder einem thermoplastischen Stärkederivat (beide im folgenden als "TPS" bezeichnet) und b) mindestens einem Polyesterurethan.

Gegenstand der vorliegenden Anmeldung ist somit eine Folie, die thermoplastische Stärke und/oder ein thermoplastisches Stärkederivat enthält und dadurch gekennzeichnet ist, daß sie aus einem thermoplastischen Gemisch hergestellt ist, das a) thermoplastische Stärke und/oder ein thermoplastisches Stärkederivat und b) mindestens ein Polyesterurethan umfaßt, das aus harten Polyurethan- und weichen Polyester-Segmenten besteht, die in alternierender Folge angeordnet sind, wobei das Gewichtsverhältnis a) : b) im Bereich von 75 : 25 bis 5 : 95, bevorzugt 30 : 70 bis 60 : 40, liegt und daß sie einen flächenbezogenen Verstreckungsgrad von 2 bis 70, bevorzugt 4 bis 40, besonders bevorzugt 6 bis 20, aufweist. Gegebenenfalls kann die Folie auch noch native Stärke enthalten. Zur Feinabstimmung des Spannungs-/Dehnungsverlaufs können dem Blend noch organische oder anorganische, feindisperse Füllstoffe zugesetzt sein. In dem Polymerblend bildet das Polyesterurethan die kontinuierliche Matrix, in der die thermoplastische Stärke bzw. das thermoplastische Stärkederivat in mikrodisperser Verteilung in Form von diskreten Partikeln mit einem Durchmesser dp von 0,05 bis 30 $\mu$m, bevorzugt zwischen 0,1 und 3,0 $\mu$m, eingebettet ist. Die Folie hat im verstreckten Zustand bevorzugt eine Dicke von 30 bis 120 $\mu$m, besonders bevorzugt von 50 bis 80 $\mu$m. Sie kann als Verpackungsfolie, insbesondere für Nahrungsmittel, speziell als nahtlose, schlauchförmige Wursthülle verwendet werden.

Das thermoplastische Stärkederivat ist vorzugsweise ein Stärkeester, wie er in der DE-A 195 15 477 ausführlich beschrieben ist. Die Säurekomponente in dem Ester ist allgemein eine ($C_2$-$C_{10}$)Alkansäure, die vorzugsweise nicht oder nur wenig verzweigt ist. Ein besonders bevorzugtes und kostengünstiges Stärkealkanoat ist Stärkeacetat mit einem Substitutionsgrad von weniger als 3, insbesondere von 1,5 bis 2,4. Anders als die Stärke selbst sind Stärkeester, wie das Stärkeacetat, bereits als solche thermoplastisch und müssen nicht erst plastifiziert werden. Stärkeester mit einer längeren Alkylkette, beispielsweise Stärkehexanoate, -octanoate oder -decanoate, bewirken eine Veränderung der Geschmeidigkeit und Zähigkeit wie auch der Permeation der Nahrungsmittelhüllen. Durch Kombinieren verschiedener Stärkeester lassen sich Hüllen mit ganz speziellen Eigenschaften herstellen. Auch Stärkeether und thermoplastische Stärkederivate, die kationische quatemäre Seitengruppen mit hydrophoben ($C_2$-$C_{18}$)Alkylgruppen, vorzugsweise ($C_2$-$C_{12}$)Alkylgruppen, aufweisen, sind geeignet. Verwendbar sind schließlich auch anionische Stärkederivate.

Es hat sich gezeigt, daß Hüllen, die nur aus thermoplastischer Stärke und/oder thermoplastischen Stärkederivaten bestehen, noch nicht das gewünschte Maß an Dehnbarkeit, Festigkeit, Zähigkeit, Geschmeidigkeit, vor allem aber an Stabilität gegenüber heißem oder kochendem Wasser aufweisen. Hüllen aus reinem Polyesterurethan besitzen ebenfalls nicht die gewünschten Eigenschaften.

Speziell fehlt es ihnen an Festigkeit, Temperaturstabilität und Kaliberkonstanz. Sie lassen sich auch dann nicht wesentlich verbessern, wenn der thermoplastischen Stärke oder dem thermoplastischen Stärkederivat noch verschiedene niedermolekulare Stoffe, wie Gleitmittel, Weichmacher und Füllstoffe, zugesetzt werden.

Überraschenderweise wurde herausgefunden, daß dann eine wesentliche Verbesserung eintritt, wenn die thermoplastische Stärke bzw. das Stärkederivat mit thermoplastischen Polyesterurethanen abgemischt wird.

Das thermoplastische Polyesterurethan (im folgenden auch bezeichnet als "TPU") besteht aus harten Polyurethan- und weichen Polyester-Segmenten, wobei die Segmente in alternierender Folge angeordnet sind. Als "weich" werden dabei Segmente mit einer Glas-Übergangstemperatur ($T_g$) von - 20 °C oder darunter bezeichnet, als "hart" dagegen solche mit einer $T_g$ von + 30 °C oder darüber. Das Polyesterurethan kann aliphatischer oder aromatischer Natur sein. Der Anteil der Polyurethansegmente in dem thermoplastischen Polyesterurethan beträgt dabei 10 bis 90 Gew.-%, bevorzugt 20 bis 50 Gew.-%, jeweils bezogen auf das Gesamtgewicht des Polyesterurethans. Sie bestehen allgemein aus Diisocyanat- und Diol-Einheiten. Die Diisocyanat-Einheiten können dabei aliphatisch, cycloaliphatisch oder aromatisch sein. Beispiele für aliphatische Diisocyanate sind Butan-1,4-diisocyanat und Hexan-1,6-diisocyanat. Isophorondiisocyanat (= 3-Isocyanatomethyl-3,5,5-trimethyl-cyclohexan-isocyanat) repräsentiert ein cycloaliphatisches Diisocyanat. Toluol-2,4- und -2,6-diisocyanat, Diphenylmethan-2,2'-, -2,4'-, -2,6'- und -4,4'-diisocyanat sowie Naphthalin-1,5-diisocyanat sind bevorzugte aromatische Diisocyanate.

Die Polyestersegmente haben in der Regel eine mittlere Molmasse $M_W$ von 500 bis 10.000 g/mol, bevorzugt 1.000 bis 4.000 g/mol. Sie bestehen bevorzugt aus Einheiten von zwei- oder mehrwertigen Alkoholen und Einheiten von zwei- oder mehrwertigen Carbonsäuren. Sie lassen sich aus den genannten Ausgangsstoffen durch Kondensationspolymerisation in Gegenwart von Katalysatoren, wie Titanbutylat (= Orthotitansäure-tetrabutylester) herstellen. Gewöhnlich bestehen die Polyestersegmente jedoch aus Diol- und Dicarbonsäure-Einheiten. In die Kondensationsreaktion können anstelle der freien Säuren naturgemäß auch entsprechende Säurederivate, wie Carbonylhalogenide (insbesondere Carbonylchloride), Carbonsäureanhydride oder Carbonsäure-($C_1$-$C_4$)alkylester eingesetzt werden. Die Diole oder Polyole haben allgemein ein aliphatisches oder cycloaliphatisches Grundgerüst. Bevorzugte Diole zur Herstellung der Estersegmente sind Ethan-1,2-diol (= Ethylenglykol), Propan-1,2- und -1,3-diol, 2,2-Dimethyl-propan-1,3-diol (= Neopentylglykol), Butan-1,4-diol, Pentan-1,5-diol, Hexan-1,6-diol und Cyclohexandiyl-bismethanol (insbesondere Cyclohexan-1,4-diyl-bismethanol). Es können auch Gemische von mehreren verschiedenen Diolen oder Polyolen eingesetzt werden. Die Di- oder Polycarbonsäuren haben bevorzugt ebenfalls ein aliphatisches oder cycloaliphatisches Grundgerüst, wobei aliphatische Dicarbonsäuren (wie Bernsteinsäure oder Adipinsäure) bevorzugt sind. Besonders bevorzugt ist Adipinsäure. Eine Dicarbonsäure mit einem cycloaliphatischen Grundgerüst ist beispielsweise Cyclohexandicarbonsäure (insbesondere Cyclohexan-1,4-dicarbonsäure). Die Polyestersegmente können auch aus Einheiten von Hydroxycarbonsäuren oder deren Derivaten aufgebaut sein, beispielsweise aus 3-Hydroxy-propionsäure, 3-Hydroxy-buttersäure, 4-Hydroxy-buttersäure, 5-Hydroxy-pentansäure oder e-Caprolacton. Besonders geeignet sind Polyesterurethane, die bei einer Temperatur von 190 °C und einer Belastung von 21,6 kg einen Volumenschmelzindex MVI (bestimmt gemäß ISO 01133) im Bereich von etwa 5 bis 15 cm$^3$/10 min aufweisen.

Die erfindungsgemäße Folie läßt sich überraschenderweise heißsiegeln bzw. verschweißen. Dazu ist eine Temperatur von etwa 100 bis 250 °C und eine Kontaktzeit von etwa 0,1 bis 5 s ausreichend. Ein zusätzlicher Kleber ist nicht erforderlich. Folien aus thermoplastischer Stärke allein sind dagegen nicht heißsiegelfähig. Die erfindungsgemäße schlauchförmige Nahrungsmittelhülle ist darüber hinaus durchlässig für Rauch, auch für Kaltrauch. Sie ist glatt, ohne dabei speckig zu wirken. In ihrem Aussehen gleicht sie weitgehend einer Naturdarmhülle. Fettpartikel zeichnen sich gut ab, denn die Hülle ist vorzugsweise transparent. Auch nach erheblichem Wasserverlust sitzt sie noch glatt und prall auf dem Wurstbrät. Dieser Effekt wird vor allem den elastischen Eigenschaften der TPU-Matrix zugeschrieben. Die Hülle läßt sich einfach abschälen, ohne daß sie dabei spontan aufplatzt. Die Weiterreißfestigkeit ist gut. Diese Eigenschaft läßt sich zudem durch Änderung von Art und Anteil der Komponenten in dem thermoplastischen Gemisch, insbesondere durch die Einarbeitung eines Füllstoffs (z. B. native Feinkornstärke), nach Wunsch einstellen.

Neben den Komponenten a) und b) kann das thermoplastische Gemisch noch weitere nieder- oder hochmolekulare Bestandteile enthalten, die insbesondere als Weichmacher oder Gleitmittel dienen oder die Verträglichkeit der Komponenten miteinander verbessern. Durch diese Bestandteile können Homogenität und Fließfähigkeit des extrudierbaren thermoplastischen Gemisches gegebenenfalls noch verbessert bzw. gezielt eingestellt werden.

Als Weichmacher eignen sich besonders Mono-, Di-, Tri- und Polyglycerin, Sorbit, Polyethylenglykol (PEG), Citronensäuretriethylester, Acetyl-citronensäuretriethylester, Glycerintriacetat, Phthalsäureester (speziell Dimethylphthalat, Diethylphthalat und Dibutylphthalat) sowie Sorbit-mono- und -diester. Der Anteil an Weichmacher(n) beträgt bis zu 40 Gew.-%, bevorzugt bis zu 25 Gew.-%, jeweils bezogen auf das Gesamtgewicht des thermoplastischen Gemisches.

Gleitmittel, die die Homogenität des thermoplastischen Gemisches verbessern, sind insbesondere pflanzliche Fette oder Öle, synthetische Triglyceride, Lecithine, ethoxylierte Fettalkohole oder Wachse. Epoxygruppen enthaltende Öle, insbesondere epoxidiertes Leinöl sind besonders geeignete Additive, die für eine optimale Dispergierung der thermoplastischen Stärke in dem thermoplastischen Polyesterurethan sorgen und gleichzeitig in überraschender Weise das Extruderdrehmoment im Zuge der Gemischaufbereitung reduzieren. Der Anteil der Gleitmittel beträgt bis zu 12 Gew.-%, bevorzugt 0,1 bis 6 Gew.-%, jeweils bezogen auf das Gesamtgewicht des Gemisches.

Die erfindungsgemäße Folie kann schließlich noch mit Fasern verstärkt sein. Im allgemeinen sind die Fasern relativ kurz (durchschnittlich etwa 0,1 bis 3 mm, bevorzugt 0,2 bis 1,5 mm). Damit die Hülle biologisch abbaubar bleibt, sind Fasern aus Baumwoll-Linters, Holzzellstoff, aus regenerierter Cellulose ("Regeneratfasern"), aus Hanf, Flachs, Sisal oder Jute besonders geeignet. Der Anteil an Fasern beträgt bis zu 30 Gew.-%, bezogen auf das Gesamtgewicht von TPS + TPU. Vorzugsweise liegt der Faseranteil bei 2 bis 15 Gew.-%, jeweils bezogen auf das Gesamtwicht des Gemisches. Die Fasern werden im Zuge des Blendaufbereitungsprozesses in dem thermoplastischen Gemisch gleichmäßig verteilt.

Die Folie kann entweder anstelle der Fasern oder zusätzlich noch Füllstoffe enthalten. Als Füllstoffe bieten sich beispielsweise Calciumcarbonat, Talkum, Kaolin (insbesondere Kaolin/Quarz-Mischungen, bekannt als "Neuburger Kieselerde"), Titandioxid, Silikate (insbesondere Wollastonit, ein Inosilikat), Anhydrit (= Calciumsulfat), Partikel aus Cellulose oder nativer Stärke (insbesondere solche mit einem Partikeldurchmesser von 15 μm oder weniger) an. Der mediane Durchmesser der Füllstoffpartikel ($d_{pF}$) liegt im Bereich von 0,1 bis 50 μm, bevorzugt 0,1 bis 20 μm, besonders bevorzugt 1 bis 5 μm. Ihr Anteil kann bis zu 30 Gew.-% betragen, bevorzugt liegt er jedoch bei 2 bis 15 Gew.-%, besonders bevorzugt bei 4 bis 10 Gew.-%, jeweils bezogen auf das Gesamtgewicht des thermoplastischen Gemisches.

Für Folien mit einer besonders hohen Stabilität gegenüber heißem oder kochendem Wasser hat es sich als günstig erwiesen, dem thermoplastischen Gemisch noch Vernetzungsmittel hinzuzufügen. Geeignete Vernetzungsmittel sind beispielsweise Dicarbonsäuren, Di- oder Triisocyanate (besonders Hexamethylendiisocyanat), Dialdehyde (besonders Glyoxal), Diepoxide, Diimine oder Silane bzw. Siloxane mit Vinylgruppe(n), beispielsweise Vinyl-trimethylsilan. Der Vernetzer wird vorzugsweise erst dann zugesetzt, wenn die übrigen Komponenten des Gemisches bereits aufgeschmolzen sind. Der Anteil an Vernetzer(n) beträgt bis zu 10 Gew.-%, vorzugsweise 0,5 bis 5 Gew.-%, besonders bevorzugt 1 bis 3 Gew.-%, jeweils bezogen auf das Gesamtgewicht des thermoplastischen Gemisches.

Die Herstellung von thermoplastischer Stärke ist beispielsweise aus den WO 90/05161 und 90/10019 bekannt. Bei der Plastifizierung wird die Helixstruktur der nativen Stärke aufgehoben, so daß sie sich danach in einem weitgehend amorphen Zustand befindet. In der thermoplastischen Stärke liegen 50 bis 100 Gew.-%, vorzugsweise mindestens 80 Gew.-%, der ursprünglich eingesetzten nativen Stärke in destrukturierter Form vor. Der Destrukturierungsgrad läßt sich durch Bildanalyse von Aufnahmen, die mit polarisiertem Licht erzeugt wurden, durch dynamische Differenz-Calorimetrie (DSC) oder durch Bestimmung der Röntgenstreuung ermitteln. Die Destrukturierung und Plastifizierung erfolgt durch Erhitzen und Zuführen mechanischer Energie, beispielsweise durch längere thermische Behandlung in einem Kneter oder in einem Ein- oder Zweischneckenextruder. Damit die Stärke unterhalb ihrer Zersetzungstemperatur schmilzt, sind Zusätze notwendig, wie Wasser, Glycerin, Propan-1,3-diol, Butan-1,4-diol, Pentan-1,5-diol, Hexan-1,6-diol, Neopentylglykol, Diglycerin, N,N-Dimethyl-hamstoff, Sorbit oder Citrat. Beim Plastifizieren mit Wasser werden etwa 20 bis 25 Gew.-% Wasser, vorzugsweise etwa 17 Gew.-% Wasser hinzugefügt, jeweils bezogen auf das Gewicht der nativen Stärke. Dabei wird eine Massetemperatur von etwa 100 bis 130 °C eingehalten. Beim Plastifizieren mit Glycerin beträgt dessen Anteil etwa 0,5 bis 30 Gew.-%, vorzugsweise 8 bis 25 Gew.-%, wiederum jeweils bezogen auf das Gewicht der nativen Stärke. In diesem Fall hat sich eine Massetemperatur von 150 bis 170 °C als günstig erwiesen. Durch diese Behandlung läßt sich der Anteil der kristallinen Stärke auf 5 Gew.-% oder weniger absenken.

Das thermoplastische Gemisch läßt sich in üblichen Apparaturen, beispielsweise in einem Zweischneckenextruder, aus den genannten Komponenten herstellen. Besonders geeignet sind Extruder mit zwei gleichläufigen, dicht kämmenden Schnecken, deren Drehzahl vorzugsweise bei 50 bis 400 pro min. liegt. Sie zeigen im Spaltbereich entgegengesetzt bewegte Schneckenoberflächen mit hoher Scherwirkung und können daher einen hohen Energiebetrag in das zu extrudierende Material eintragen. Ein homogenes, thermoplastisches Schmelzegemisch bildet sich aus den Einzelkomponenten bei einer Temperatur von 150 bis 230 °C, bevorzugt von 170 bis 210 °C.

Zur Herstellung des thermoplastischen Gemisches sind mehrere Verfahrensvarianten möglich. In der ersten Variante wird native Stärke zunächst mit Hilfe der beschriebenen Destrukurierungshilfsstoffe (insbesondere Glycerin) plastifiziert. Über einen sogenannten Seitenstromextruder (side feeder) wird dann das thermoplastische Polyesterurethan zugeführt. Es wird mit der aufgeschmolzenen und entgasten thermoplastischen Stärke vermischt, das resultierende Gemisch dann erneut entgast. Die Schmelze kann anschließend extrudiert, nach dem Abkühlen in ein lagerfähiges Granulat verwandelt werden. Ebenso gut kann sie auch direkt mittels einer Schmelzepumpe einer Ringdüse zugeführt und zu einer schlauchförmigen Nahrungsmittelhülle verarbeitet werden. In einer weiteren Verfahrensvariante dient granulierte thermoplastische Stärke bzw. ein granuliertes Stärkederivat als Ausgangsmaterial. Nach dessen Aufschmelzen und Entgasen im Extruder folgt das Vermischen mit dem TPU. In einer dritten Variante werden TPS und TPU zusammen dem Extruder zugeführt. Schließlich kann das thermoplastische Polyesterurethan auch mit nativer Stärke vermischt und damit "gefüllt" werden. Beim Vermischen im Extruder wird bereits ein ausreichender Anteil der Stärke plastifiziert, insbesondere wenn noch ein Plastifizierungshilfsstoff (z.B. Glycerin) hinzugefügt wird.

Zur Herstellung einer Schlauchfolie wird das thermoplastische Gemisch durch eine beheizte Ringdüse extrudiert. Die Temperatur in der Ringdüse liegt bei 100 bis 160 °C und damit vorzugsweise etwas niedriger als in den vorgeschalteten Heizzonen des Compoundier- bzw. Plastifizierextruders (dort beträgt sie im allgemeinen 110 bis 190 °C).

Gegenstand der vorliegenden Erfindung ist somit auch ein Verfahren zur Herstellung der erfindungsgemäßen Folie, bei dem ein durch Extrusion hergestellter Schlauch durch Aufblasen mit Luft (oder einem anderen Gas) blasgeformt wird, wobei der flächenbezogene Verstreckungsgrad $\lambda_A = \lambda_1 \cdot \lambda_2$ im Bereich von 2 bis 70, bevorzugt von 4 bis 40, besonders bevorzugt von 6 bis 20 liegt. In dem Schlauchfolien-Blasprozess sind die Verstreckraten wie folgt definiert:

$$\lambda_1 = D_S/D_D; \; \lambda_2 = v_S/v_D, \; \lambda_3 = S_S/S_D,$$

wobei

$D_S$     Folienschlauchdurchmesser,
$D_D$     Düsendurchmesser,
$v_S$     Schlauchabzugsgeschwindigkeit,
$v_D$     mittlere Schmelzeaustrittgeschwindigkeit aus der Düse,
$S_S$     Foliendicke und
$S_P$     Düsenaustrittsspaltweite bedeuten.

Aus Kontinuitätsgründen muß gelten $\lambda_1 \cdot \lambda_2 \cdot \lambda_3 = 1$ , d. h. der flächenbezogene Verstreckungsgrad $\lambda_A$ ist der Produktdickenreduktion $\lambda_3$ umgekehrt proportional.

Soll eine Flachfolie hergestellt werden, so kann die Polymerschmelze auch durch eine Breitschlitzdüse extrudiert werden. Durch Verstreckung in Längs- und Querrichtung (beispielsweise mit Hilfe eines Kluppenrahmens) lassen sich dann die angegebenen flächenbezogenen Verstreckungsgrade erreichen. Daneben kann die beschriebene blasgeformte Schlauchfolie natürlich auch durch einfaches Aufschneiden zu einer Flachfolie werden.

Erst durch den Verstreck- und Orientierungsvorgang erhalten die Schläuche die optimale Festigkeit, Dehnung, Kaliberhaltung und Schrumpffähigkeit. Wie stark ausgeprägt jede dieser Eigenschaften ist, hängt primär von der Zusammensetzung des thermoplastischen Gemisches ab. So lassen sich die Nahrungsmittelhüllen durch gezielte Auswahl von Art und Anteil der einzelnen Komponenten des thermoplastischen Gemisches oder durch Einstellen der Verstreckungsparameter den unterschiedlichen Anforderungen anpassen. Gegebenenfalls können die blasgeformten Hüllen auch noch teilweise thermofixiert werden. Die erfindungsgemäße Folie besteht allgemein aus nur einer Schicht. Durch Coextrusion lassen sich jedoch auch mehrschichtige Hüllen herstellen.

Durch Waschen in einem geeigneten Bad, beispielsweise einem Wasserbad oder einem Bad aus verdünnter (etwa 1gew.-%iger) Säure, lassen sich wasserlösliche Weichmacher bzw. Plastifizierhilfsmittel aus der erfindungsgemäßen Folie entfernen. Überraschenderweise zeigte sich, daß sich dadurch die mechanischen Eigenschaften der Folie nicht verschlechtern. Der Anteil an Weichmachern bzw. Plastifizierhilfsmitteln beträgt nach diesem Waschen vorzugsweise weniger als 2 Gew.-%, bezogen auf das Gesamtgewicht der trockenen Hülle.

In einem weiteren Verfahrensschritt können die schlauchförmigen Hüllen mit einer Innen- und/oder Außenpräparation versehen werden, um sie für die verschiedenen Verwendungen als Wursthülle noch besser geeignet zu machen.

Dafür lassen sich die meisten der flüssigen Präparationen, die auch für die Veredelung von Cellulosehydrathüllen üblich sind, in entsprechend angepaßter Konzentration einsetzen. So ist es besonders günstig, die innere Oberfläche einer für Dauerwurst vorgesehenen Hülle mit Eiweiß (bevorzugt Casein, Gelatine, Sojaprotein oder Weizenprotein) zu überziehen. Das Eiweiß wird dabei üblicherweise mit einem (Di-)Aldehyd an die Oberfläche der Hülle gebunden. Durch den Einsatz von Harzen oder durch den Zusatz von Trennmitteln zum Eiweiß/Aldehyd kann die Schälbarkeit der Wursthülle eingestellt werden. Die Haftung der Hülle am Wurstbrät läßt sich mit bekannten Rezepturen bis zu einer starken Trennwirkung reduzieren (das ist beispielsweise erforderlich im Fall der Thüringer Blutwurst).

Geeignete Außenpräparationen sind ebenfalls bereits von Cellulosehüllen bekannt. Durch Behandeln der äußeren Oberfläche der Hülle mit einer solchen Präparation lassen sich insbesondere Schimmelresistenz, Oberflächenrauhigkeit und Bedruckbarkeit einstellen.

Die erfindungsgemäße Nahrungsmittelhülle kann in ihren Eigenschaften so weit variiert werden, daß sie einem Naturdarm oder einem Cellulosedarm entspricht. Ihre guten Quell- und Schrumpfeigenschaften bewirken, daß sie jederzeit straff am Wurstbrät anliegt und daß sich auch beim langsamen Abtrocknen keine Falten bilden. Durch die Wahl der Komponenten kann die Permeabilität der Hülle für Wasser, Wasserdampf und Sauerstoff exakt eingestellt werden. Überraschend zeigte sich, daß die erfindungsgemäße Hülle durchlässig für Rauch ist, so daß sie sich für geräucherte Rohwurstsorten (beispielsweise Salami- oder Cervelatwurst) besonders gut eignet. Mit der erfindungsgemäßen Hülle lassen sich jedoch auch andere Nahrungsmittel verpacken, beispielsweise Käse.

Die zur Herstellung der Hülle eingesetzte Stärke gehört darüber hinaus zu den besonders gern verwendeten nachwachsenden Rohstoffen. Bei der Kompostierung wird die erfindungsgemäße Hülle besonders schnell abgebaut, da den Mikroben neben dem Polyesterurethan auch die leicht verwertbare Stärke als Kohlenstoffquelle zur Verfügung steht. Es findet somit ein co-metaboler Abbau statt, bei dem die harten aromatischen Polyurethansegmente sehr viel schneller abgebaut werden als normal.

Die folgenden Beispiele sollen die Erfindung näher erläutern. Die Prozente sind als Gewichtsprozente zu verstehen, soweit nicht anders angegeben.

**Herstellung der thermoplastischen Polymergemische**

Beispiel 1

Herstellung thermoplastischer Stärke und des Gemisches aus thermoplastischer Stärke und Polyurethan

a) 100 kg Maisstärke wurden unter vermindertem Druck auf einen Wassergehalt von weniger als 0,3 % im Vakuum getrocknet und mit 20 kg Glycerin (99 %ig) und 2 kg epoxidiertem Leinöl in einem ZweischneckenExtruder bei 160 bis 190 °C aufgeschmolzen und gut durchmischt. Sie wurde dann extrudiert und granuliert. Beim anschließenden Lagern des Granulats blieb die Stärke im amorphen und damit thermoplastischen Zustand.

b) 100 kg native Maisstärke und 20 kg Glycerin wurden zusammen mit 2 kg epoxidiertem Leinöl in einem gleichsinnig drehenden ZweischneckenExtruder mit einer Verfahrenslänge von 40 D vermischt und plastifiziert, wobei eine Stärkedestrukturierung eintrat. Durch mehrere Entgasungen wurde der Wassergehalt auf unter 1 Gew.-%, bezogen auf das Gesamtgewicht der eingesetzten Maisstärke, gesenkt. Die Extrusion erfolgte mit dem Temperaturprofil 100 °C → 175 °C → 170 °C.

c) 60 kg des unter b) beschriebenen Granulats wurden in einem Zweischneckenextruder aufgeschmolzen, entgast und anschließend mit 60 kg thermoplastischem Polyesterurethan vermischt, wobei das TPU über einen Seitenstromextruder zugeführt wurde. Die Estersegmente in dem Polyesterurethan bestanden aus Adipinsäure- und Ethylenglykol-Einheiten und hatten eine mittlere Molmasse $M_w$ von 3.500 bis 4.000 g/mol. Das thermoplastische Polymergemisch wurde anschließend granuliert.

Beispiel 2

Beispiel 1 wurde wiederholt mit der einzigen Abweichung, daß ein Polyesterurethan verwendet wurde, dessen Estersegmente aus Adipinsäure- und Butan-1,4-diol-Einheiten aufgebaut waren und eine mittlere Molmasse von 2.000 g/mol hatten.

Beispiel 3

Beispiel 1 wurde wiederholt mit der einzigen Abweichung, daß das TPU einen Anteil von 40 statt 50 Gew.-% hatte, bezogen auf das Gesamtgewicht des thermoplastischen Gemisches.

Beispiel 4

Beispiel 2 wurde wiederholt mit der einzigen Abweichung, daß das TPU einen Anteil von 40 statt 50 Gew.-% hatte, bezogen auf das Gesamtgewicht des thermoplastischen Gemisches.

**Herstellung der Nahrungsmittelhüllen**

Beispiel 5

Das im Beispiel 2 beschriebene Granulat wurden in einem Extruder bei 170 °C aufgeschmolzen. Die Drehzahl der Extruderschnecke betrug 35 Umdrehungen pro Minute. Anschließend wurde die Schmelze durch eine Ringdüse mit einem Durchmesser von 25 mm und einem Düsenspalt von 1,0 mm extrudiert. Die Temperatur in der Ringdüse betrug 165 °C, die Abzugsgeschwindigkeit 4,7 m/min. Nach dem Blasformen wurde ein Schlauch mit einem Durchmesser von 65 mm (= Kaliber 65) erhalten ($\rightarrow D_S/D_D = \lambda_1 = 2,6$).

Beispiel 6

Das im Beispiel 1 beschriebene Granulat wurde wie im vorangehenden Beispiel aufgeschmolzen und extrudiert. Die Ringdüse hatte dabei einen Durchmesser von 25 mm und einen Düsenspalt von 0,75 mm. Nach dem Blasformen wurde ein Schlauch vom Kaliber 120 mit einer Wanddicke von 60 μm erhalten. Im gewässerten Zustand betrug die Reißfestigkeit $\sigma_R$ des Schlauches 14,3 N/mm$^2$ und die Reißdehnung $\varepsilon_R$ 211 %.

Beispiel 7

Das im Beispiel 2 beschriebene Granulat wurde aufgeschmolzen und extrudiert. Die Ringdüse hatte dabei einen Durchmesser von 10 mm und einen Düsenspalt von 0,9 mm. Die Temperatur des Schlauchextrusionswerkzeugs betrug 145 °C, die Abzugsgeschwindigkeit 4,5 m/min. Nach dem Blasformen wurde ein Schlauch vom Kaliber 30 mit einer Wanddicke von 65 μm erhalten. Im gewässerten Zustand lag seine Reißfestigkeit von 11,3 N/mm$^2$ und die Reißdehnung bei 236 %.

Beispiele 8 bis 10

Das im Beispiel 2 beschriebene Granulat wurde aufgeschmolzen (Schmelztemperatur von 182 °C) und extrudiert. Die Schneckendrehzahl des Extruders betrug 29 UpM. Die Ringdüse hatte dabei einen Durchmesser von 15 mm und einen Düsenspalt von 0,6 mm. Die Extrusion erfolgte mit folgendem Zylindertemperaturprofil: 130 °C, 170 °C, 190 °C, 190 °C. Die Austrittsgeschwindigkeit betrug 1,24 m/min, der Ausstoß 2,5 kg/h. Auf diese Weise wurden Blasfolienschläuche vom Kaliber 45 (Flachbreite 70 mm) mit verschiedener Wanddicke hergestellt. Die Schwankung in der Flachbreite betrug ± 0,5 mm. In der folgenden Tabelle sind die Versuchsdaten und Prozeßparameter zusammengefaßt.

Tabelle

| Beispiel | | 8 | 9 | 10 |
|---|---|---|---|---|
| Abzugsgeschwindigkeit [m/min] | | 2,7 | 4,2 | 3,0 |
| Wanddicke [μm] | | 88 | 51 | 72 |
| Längsstreckung | | 2,2 | 3,4 | 2,4 |
| Querstreckung | | 2,9 | 2,9 | 2,9 |
| Dickenverhältnis | | 7,2 | 11,4 | 8,6 |
| Reißfestigkeit [N/mm$^2$] | längs | 19,6 | 20,3 | 19,5 |
| | quer | 17,2 | 16,2 | 17,9 |
| Reißdehnung [%] | längs | 446,7 | 468,1 | 446,7 |
| | quer | 453,3 | 415,2 | 443,4 |
| in gewässertem Zustand | | | | |
| Reißfestigkeit (quer) [N/mm$^2$] | | 6,7 | 6,3 | 6,3 |
| Reißdehnung (quer) [%] | | 221 | 168,9 | 192,4 |
| nach dem Waschen mit vollentsalztem Wasser ('VE-Wasser') und nach dem Trocknen | | | | |
| Wanddicke [μm] | | 70 | | |
| Restglyceringehalt, bezogen auf die trockene Hülle [%] | | 1,3 | | |
| Reißfestigkeit (quer) [N/mm$^2$] | | 20,5 | | |
| Reißdehnung (quer) [%] | | 232 | | |

Die erfindungsgemäßen Nahrungsmittelhüllen sind beständig in Wasser, quellen jedoch darin und schrumpfen wieder beim Trocknen. Sie können in Form von einseitig abgebundenen Abschnitten oder in aufgestockter Form als sogenannte "Raupen" auf die Füllvorrichtung aufgesetzt werden. Sie sind insbesondere als Hüllen für Dauerwurst, (d.h. für eine Rohwurst mit besonders hohem Reifegrad) geeignet.

Die Hüllen wurden mit Salamibrät gefüllt. Die Haftung am Brät war gering (Schälbarkeit nach 2 Wochen: "2" auf einer Werteskala von 1 bis 6, wobei "1" für "sehr leicht schälbar' und "6" für "übermäßig starke Haftung, Hülle kann nicht zerstörungsfrei abgezogen werden" steht).

Der Vorteil der erfindungsgemäßen Hüllen besteht darin, daß TPU selbst für keine große Affinität zum Dauerwurstbrät sorgt und für dieses Brät keine zusätzliche Präparation erforderlich ist.

**Patentansprüche**

1.  Folie, die thermoplastische Stärke und/oder ein thermoplastisches Stärkederivat enthält, **dadurch gekennzeichnet, daß** sie aus einem thermoplastischen Gemisch hergestellt ist, das a) thermoplastische Stärke und/oder ein thermoplastisches Stärkederivat und b) mindestens ein Polyesterurethan umfaßt, das aus harten Polyurethan- und weichen Polyester-Segmenten besteht, die in alternierender Folge angeordnet sind, wobei das Gewichtsverhältnis a) : b) im Bereich von 75 : 25 bis 5 : 95 liegt, und daß sie einen flächenbezogenen Verstreckungsgrad von 2 bis 70 aufweist.

2.  Folie gemäß Anspruch 1, **dadurch gekennzeichnet, daß** das Gewichtsverhältnis a) : b) im Bereich von 30 : 70 bis 60 : 40 liegt.

3.  Folie gemäß Anspruch 1 oder 2, **dadurch gekennzeichnet, daß** das thermoplastische Stärkederivat ein Stärkeester ist.

4.  Folie gemäß Anspruch 1, **dadurch gekennzeichnet, daß** der Anteil der Polyurethansegmente in dem thermoplastischen Polyesterurethan 10 bis 90 Gew.-%, bezogen auf das Gesamtgewicht des Polyesterurethans, beträgt.

5.  Folie gemäß einem oder mehreren der Ansprüche 1 bis 4, **dadurch gekennzeichnet, daß** das thermoplastische Gemisch mindestens einen Weichmacher enthält, wobei der Anteil an Weichmacher(n) bis zu 40 Gew.-%, bezogen auf das Gesamtgewicht des thermoplastischen Gemisches, beträgt.

6.  Folie gemäß einem oder mehreren der Ansprüche 1 bis 5, **dadurch gekennzeichnet, daß** das thermoplastische Gemisch mindestens ein Gleitmittel enthält, wobei der Anteil an Gleitmittel(n) bis zu 12 Gew.-%, bezogen auf das Gesamtgewicht des thermoplastischen Gemisches, beträgt.

7.  Folie gemäß einem oder mehreren der Ansprüche 1 bis 6, **dadurch gekennzeichnet, daß** das thermoplastische Gemisch mit Fasern vermischt ist, wobei der Anteil an Fasern bis zu 30 Gew.-%, bezogen auf das Gesamtwicht des Gemisches, beträgt.

8.  Folie gemäß einem oder mehreren der Ansprüche 1 bis 7, **dadurch gekennzeichnet, daß** das thermoplastische Gemisch Füllstoffe enthält, wobei der Anteil der Füllstoffe bis zu 30 Gew.-%, bezogen auf das Gesamtgewicht des Gemisches, beträgt.

9.  Folie gemäß einem oder mehreren der Ansprüche 1 bis 8, **dadurch gekennzeichnet, daß** das thermoplastische Gemisch mindestens ein Vernetzungsmittel enthält, wobei der Anteil an Vernetzer(n) bis zu 10 Gew.-%, bezogen auf das Gesamtgewicht des Gemisches, beträgt.

10. Folie gemäß einem oder mehreren der Ansprüche 1 bis 9, **dadurch gekennzeichnet, daß** sie heißsiegelfähig ist.

11. Folie gemäß einem oder mehreren der Ansprüche 1 bis 10, **dadurch gekennzeichnet, daß** sie mit einer Innen- und/oder Außenpräparation versehen ist.

12. Verfahren zur Herstellung einer Folie gemäß einem oder mehreren der Ansprüche 1 bis 11, **dadurch gekennzeichnet, daß** der aus dem thermoplastischen Gemisch durch Extrusion hergestellter Schlauch blasgeformt wird, wobei der flächenbezogene Verstreckungsgrad im Bereich von 2 bis 70 liegt.

**13.** Verwendung der Folie gemäß einem oder mehreren der Ansprüche 1 bis 11 als Verpackungsfolie.

**14.** Verwendung der Folie gemäß einem oder mehreren der Ansprüche 1 bis 11 als nahtlose, schlauchförmige Wursthülle.

## Claims

**1.** A film which comprises thermoplastic starch and/or a thermoplastic starch derivative, **characterized in that** it is produced from a thermoplastic mixture which comprises a) thermoplastic starch and/or a thermoplastic starch derivative and b) at least one polyester urethane which consists of hard polyurethane segments and soft polyester segments, the segments being arranged in alternating sequence, with the weight ratio a):b) being in the range from 75:25 to 5:95, and which has an area-based drawing ratio of from 2 to 70.

**2.** The film as claimed in claim 1, wherein the weight ratio a):b) is in the range from 30:70 to 60:40.

**3.** The film as claimed in claim 1 or 2, wherein the thermoplastic starch derivative is a starch ester.

**4.** The film as claimed in claim 1, wherein the proportion of polyurethane segments in the thermoplastic polyester urethane is from 10 to 90% by weight based on the total weight of the polyester urethane.

**5.** The film as claimed in one or more of claims 1 to 4, wherein the thermoplastic mixture comprises at least one plasticizer, the proportion of plasticizer(s) being up to 40% by weight based on the total weight of the thermoplastic mixture.

**6.** The film as claimed in one or more of claims 1 to 5, wherein the thermoplastic mixture comprises at least one lubricant, the proportion of lubricant(s) being up to 12% by weight based on the total weight of the thermoplastic mixture.

**7.** The film as claimed in one or more of claims 1 to 6, wherein the thermoplastic mixture is mixed with fibers, the proportion of fibers being up to 30% by weight based on the total weight of the mixture.

**8.** The film as claimed in one or more of claims 1 to 7, wherein the thermoplastic mixture comprises fillers, the proportion of the fillers being up to 30% by weight based on the total weight of the mixture.

**9.** The film as claimed in one or more of claims 1 to 8, wherein the thermoplastic mixture comprises at least one crosslinker, the proportion of crosslinker(s) being up to 10% by weight based on the total weight of the mixture.

**10.** The film as claimed in one or more of claims 1 to 9, wherein it is hot-sealable.

**11.** The film as claimed in one or more of claims 1 to 10, wherein it is furnished with an inner and/or outer preparation.

**12.** A process for producing a film as claimed in one or more of claims 1 to 11, which comprises blowing the tube which is produced from the thermoplastic mixture by extrusion, the area-based drawing ratio being in the range from 2 to 70.

**13.** The use of the film as claimed in one or more of claims 1 to 11 as packaging film.

**14.** The use of the film as claimed in one or more of claims 1 to 11 as seamless, tubular sausage casing

## Revendications

**1.** Feuille contenant de l'amidon thermoplastique et/ou un dérivé d'amidon thermoplastique, **caractérisé en ce qu'**elle est fabriquée à partir d'un mélange thermoplastique, lequel comprend :

a) de l'amidon thermoplastique et/ou un dérivé d'amidon thermoplastique, et
b) au moins un polyester uréthane, lequel est composé de segments polyuréthanes durs et de segments polyesters souples, lesquels sont disposés en suite alternante, le ratio pondéral a/b étant compris dans la gamme de 75 : 25 jusqu'à 5 : 95, et **en ce qu'**elle présente un taux d'allongement surfacique allant de 2 à 70.

2. Feuille selon la revendication 1, **caractérisée en ce que** le ratio pondéral a/b est compris dans la gamme allant de 30 : 70 à 60 : 40.

3. Feuille selon la revendication 1 ou 2, **caractérisée en ce que** le dérivé d'amidon thermoplastique est un ester d'amidon.

4. Feuille selon la revendication 1, **caractérisée en ce que** la proportion de segments polyuréthanes dans le poly (ester-uréthane) thermoplastique est de 10 à 90 % en poids par rapport au poids total en polyester uréthane.

5. Feuille selon l'une des revendications 1 à 4, **caractérisée en ce que** le mélange thermoplastique comprend au moins un plastifiant, la proportion en plastifiant (s) pouvant atteindre 40 % en poids par rapport au poids total du mélange thermoplastique.

6. Feuille selon l'une des revendications 1 à 5, **caractérisée en ce que** le mélange thermoplastique comprend au moins un agent anti-friction, la proportion en agent (s) anti-friction pouvant aller jusqu'à 12 % en poids par rapport en poids total du mélange thermoplastique.

7. Feuille selon l'une des revendications 1 à 6, **caractérisée en ce que** le mélange thermoplastique est mélangé avec des fibres, la proportion en fibres pouvant aller jusqu'à 30 % en poids par rapport au poids total du mélange.

8. Feuille selon l'une des revendications 1 à 7, **caractérisée en ce que** le mélange thermoplastique comporte des charges, la proportion en charge pouvant aller jusqu'à 30 % en poids par rapport au poids total du mélange.

9. Feuille selon l'une des revendications 1 à 8, **caractérisée en ce que** le mélange thermoplastique contient au moins un agent de réticulation, la proportion en agent (s) de réticulation pouvant aller jusqu'à 10 % en poids par rapport au poids total du mélange.

10. Feuille selon l'une des revendications 1 à 9, **caractérisée en ce que** elle est thermofusible.

11. Feuille selon l'une des revendications 1 à 10, **caractérisée en ce qu'**elle est pourvue d'un revêtement intérieur et/ou extérieur.

12. Procédé de préparation selon l'une des revendications 1 à 11, **caractérisé en e que** le tube fabriqué par extrusion à partir du mélange thermoplastique est formé par soufflage, le taux d'allongement surfacique étant compris dans la gamme allant de 2 à 70.

13. Utilisation de la feuille selon l'une des revendications 1 à 11 à titre de feuille d'emballage.

14. Utilisation de la feuille selon l'une des revendications 1 à 11 comme enveloppe de saucisse tubulaire sans couture.